# EUROPÄISCHE PATENTSCHRIFT

(11) **EP 1 702 250 B1**
(45) Veröffentlichungstag und Bekanntmachung des Hinweises auf die Patenterteilung: **08.07.2009**
(21) Anmeldenummer: 04804423.4
(22) Anmeldetag: 30.12.2004
(51) Int. Cl.: G06F 1/00

(54) **VERFAHREN ZUM STEUERN EINES DATENVERARBEITUNGSGERÄTS**
METHOD FOR CONTROLLING A DATA PROCESSING DEVICE
PROCEDE POUR COMMANDER UN APPAREIL DE TRAITEMENT DE DONNEES

(30) Priorität: 30.12.2003 EP 03029967
(43) Veröffentlichungstag der Anmeldung: 20.09.2006
(73) Patentinhaber: Wibu-Systems AG, 76137 Karlsruhe (DE)
(72) Erfinder: WINZENRIED, Oliver, 76137 Karlsruhe (DE); BUCHHEIT, Marcellus, 76133 Karlsruhe (DE); FUST, Ralf, 76135 Karlsruhe (DE)
(74) Vertreter: Petirsch, Markus
(86) Internationale Anmeldenummer: PCT/EP2004/014838
(87) Internationale Veröffentlichungsnummer: WO 2005/064480

(56) Entgegenhaltungen:
- WO-A-20/04086363
- US-A1- 2003 074 569
- US-A1- 2004 098 596
- [Online] 12. August 2003 (2003-08-12), XP002346996 Gefunden im Internet: URL:http://www.m-systems.com/NR/rdonlyres/ D6AA1A07-F28A-4E37-890D-CD0E27C990A2/0/Fla sh_management_software.pdf> [gefunden am 2005-09-28]

## Beschreibung

Die vorliegende Erfindung betrifft ein Verfahren zum Steuern eines Datenverarbeitungsgeräts, das über eine Schnittstelle an einen Computer angeschlossen ist.

Standardbetriebssysteme von Computern verhindern den direkten Zugriff von Applikationsprogrammen auf vorhandene Hardware oder angeschlossene Geräte. Typischerweise verwaltet das Betriebssystem die Hardware und die Geräte und stellt dem Applikationsprogramm Betriebsfunktionen zu deren Benutzung zur Verfügung. Dies geschieht aus Gründen der Stabilität und der Sicherheit. Auf diese Weise ist es unmöglich, dass beispielsweise der Inhalt von Massenspeichern, wie etwa eine Festplatte, durch ein fehlerhaft arbeitendes Anwendungsprogramm in falscher Weise abgespeichert wird.

Spezifische Operationen und Befehle, wie das direkte Zugreifen auf ein Gerät, beispielweise via "SCSI-pass-through" oder "USB low-level"-Verbindungen, sind beschränkt. Entweder ist der Zugriff den Administratoren des Betriebssystems vorbehalten oder der Zugriff wird durch spezielle Gerätetreiber kontrolliert und überwacht. Die Gerätetreiber lassen sich jedoch ebenfalls nur mit Administrator-Rechten des Betriebssystems auf dem Computer installieren. Die Beschreibung einer "SCSI-pass-through"-Verbindung ist beispielsweise aus US 2003/088868 A1 bekannt und zeigt ebenfalls die oben beschriebenen Beschränkungen. Den gezeigten spezifischen, unterschiedlichen Ablaufdiagrammen für unterschiedliche Schnittstellen und Formfaktoren des Gerätes ist zu entnehmen, dass das Verfahren nicht universell einsetzbar ist.

Nachteilig wirken sich diese Einschränkungen für den normalen Benutzer aus, der auf ein Gerät zugreifen und dieses nutzen möchte. Immer wenn ein gewöhnlicher Nutzer ein Gerät an einen Computer anschließt, benötigt er Administrator-Rechte, um auf das Gerät zugreifen zu können; dies gilt zumindest beim ersten Zugriff, wenn der spezielle Gerätetreiber installiert und erstmalig gestartet werden soll. Die meisten Nutzer verfügen jedoch nicht über diese Administrator-Rechte. Gerade bei öffentlich zugänglichen Computern oder bei Computern, die in einem Firmennetz installiert sind, sind die Rechte der Normalbenutzer oder Gastbenutzer stark beschränkt. Damit wird automatisch auch der Zugriff und die Benutzung von Geräten eingeschränkt, die über eine Schnittstelle an einen Computer angeschlossen sind.

Für den Zugriff auf Dateien werden allerdings in der Regel keine Administrator-Rechte benötigt. Um eine Datei auf ein internes oder externes Speichermedium zu schreiben bzw. zu speichern oder es von diesem zu lesen bzw. rückzuspeichern, genügen die Zugriffsrechte eines Normalbenutzers, meistens sogar die Rechte eines Gastbenutzers. Dies gilt insbesondere, wenn der Anwender selbst Besitzer des Speichermediums ist.

Die Ausführung von anderen Computerbefehlen als Speichern oder Lesen von Dateien ist dem normalen Nutzer in der Regel jedoch nicht gestattet. Je größer der Eingriff des auszuführenden Computerbefehls auf den Inhalt der Hardware oder angeschlossenen Geräte ist und je stärker der Befehl in das Filemanagement-System des Computers eingreift, desto exklusiver ist die Ausführung eines solchen Befehls. Nur Personen mit besonderen Rechten können derartige Befehle ausführen; bestimmte kritische Befehle sind sogar ausschließlich dem Administrator vorbehalten.

Ein Beispiel für ein Gerät mit gerätespezifischem Treiber zeigt US 2003/074569A1. Dargestellt wird ein Verfahren und ein Speichermedium zum Speichern und Wiederherstellen von Verschlüsselungsdaten, um verschlüsselte Dateninhalte zu lesen. Dazu wird ein proprietäres Kommunikationsprotokoll zum Austausch der Daten mit einer Speicherkarte mittels speziell definierter Schnittstellenkommandos verwendet, beispielsweise mit einem "write request" oder "read out request". Das deterministische Programm eignet sich ausschließlich für den Datenaustausch von ID-Daten und verschlüsselten Sequenzen zwischen einem Gerät und einer dedizierten Speicherkarte. Mit ID-Daten werden unverwechselbare, gerätespezifische Kenndaten bezeichnet, die für jedes Gerät unterschiedlich sind. Wie in US 2003/088868 A1 sind auch hier je nach Speicherkarte unterschiedliche, gerätespezifische Befehle erforderlich.

Aus der Beschreibung "Flash Management Software" der Firma M-Systems ist ebenfalls eine deterministische Ablaufsteuerung bekannt, die auf das fehlerfreie und ausfallsichere Speichern und Lesen von Files in einem Flash-Speicher beschränkt ist. Die Ablaufsteuerung berechnet zu einer logischen Blockadresse einen physikalischen Speicherort in einem Flashspeicher.

Es stellt sich somit die Aufgabe, durch einen Computer mit einem angeschlossenen Datenverarbeitungsgerät zu kommunizieren und auf diesem Befehle und Kommandos ausführen zu lassen, ohne das Betriebssystem des Computers zu erweitern oder zu verändern bzw. ohne einen speziellen Treiber zu installieren, der erst den Zugriff auf das angeschlossene Gerät ermöglicht. Die Kommunikation mit dem angeschlossenen Datenverarbeitungsgerät soll zudem regelmäßig und zügig erfolgen können und für verschiedene Betriebssysteme und Schnittstellen ohne spezifische Anpassung möglich sein.

Gelöst wird die Aufgabe mit einem Verfahren zum Steuern eines Datenverarbeitungsgeräts gemäß den Merkmalen des Patentanspruchs 1, mit einem System mit den Merkmalen des Anspruchs 12 und einem Gerät mit den Merkmalen des Anspruchs 18.

Das erfindungsgemäße Verfahren zum Steuern eines Datenverarbeitungsgeräts, das über eine Schnittstelle an einem Computer angeschlossen ist und dass ein Speichermedium mit einem Filesystem simuliert, einen dedizierten Bereich mit einer Blockadresse aufweist und einen Kommandoausführer zum Ausführen von gerätespezifischen Kommandos umfasst, weist die nachfolgenden Schritte auf: Erzeugen eines gerätespezifischen Kommandos durch ein Anwendungsprogramm, das auf dem Computer installiert ist und ausgeführt wird. Ablegen des Kommandos in einem speziellen File. Übertragen des speziellen Files vom Computer an das Gerät über die Schnittstelle durch Adressierung des Files an eine Blockadresse mittels des Schreibbefehls des Betriebssystems des Computers. Das spezielle File wird durch das Gerät empfangen. Das gerätespezifische Kommando wird mittels des Kommandoausführers in dem Gerät aus dem speziellen File ausgelesen. Als letzter Schritt wird das Kommando durch den Kommandoausführer des Geräts ausgeführt.

Das von dem Anwendungsprogramm erzeugte Kommando kann beispielsweise ein Steuerbefehl für das Gerät oder eine Abfrage des Gerätestatus sein. Das Kommando wird in einem "File" verpackt, das über den gewöhnlichen Schreibbefehl des Computers an das angeschlossene Gerät übermittelt wird. Dem Betriebssystem des Computers wird also "vorgetäuscht", dass ein Speichermedium an seiner Schnittstelle vorhanden sei. Der Computer bzw. dessen Betriebssystem "sieht" also in dem angeschlossenen Gerät ein Speichermedium, wie beispielsweise eine Festplatte, auch wenn nicht notwendigerweise ein Speichermedium vorhanden ist.

Die Ausführung eines Schreibbefehls des Betriebssystems ist möglich, da das externe Gerät ein Speichermedium mit entsprechendem Filesystem simuliert und das Betriebssystem des Computers nicht zwischen dem simulierten Filesystem des Gerätes und einem tatsächlich angeschlossenen Massenspeicher unterscheiden kann. Somit ist es möglich, Dateien mittels des betriebssystemeigenen Schreibbefehls auf dem scheinbar vorhandenen Speichermedium zu "speichern", obwohl in Wirklichkeit gar kein Massenspeicher angeschlossen ist und die Dateien nur an das Gerät übermittelt werden, um das darin verpackte Kommando ausführen zu lassen.

Da nach der Erfindung lediglich der betriebssystemeigene Schreibbefehl verwendet wird, kann auf das angeschlossene Gerät zugegriffen werden, ohne eine zusätzliche Treibersoftware zu installieren. Folglich sind auch keine besonderen Nutzer-Rechte oder gar Administrator-Rechte notwendig, um das angeschlossene externe Gerät zu steuern. Der Schreibbefehl des Betriebssystems kann von jedem normalen Benutzer ohne besondere Zugriffsrechte ausgeführt werden. Normale Benutzer oder Gastbenutzer können einfach das Anwendungsprogramm auf dem Computer ausführen und auf diese Weise das spezielle File an das Gerät übertragen, um dort ein Kommando auszuführen.

Das Anwendungsprogramm auf dem Computer verpackt oder versteckt das auszuführende gerätespezifische Kommando in einem normalen Datenfile. Das File ist eine Datei, die an einer logischen Blockadresse im Filesystem eines Gerätes oder Speichermediums abgelegt werden soll. Die spezielle Datei soll an einem bestimmten, aber flexiblen Speicherort abgespeichert werden. Nicht das Kommando selbst, sondern die spezielle Datei wird dann an das Gerät übertragen. Somit findet eine Art Tunnelung unter Verwendung des Schreibbefehls des Betriebssystems statt. Das eigentliche Kommando ist dem Betriebssystem des Computers nicht bekannt. Das Betriebssystem sieht lediglich ein Datenfile, das auf einem nur scheinbar vorhandenen Speichermedium abzulegen ist.

Der Prozessor des angeschlossenen Geräts liest aus dem speziellen File das auszuführende gerätespezifische Kommando aus. Das übertragene Kommando wird dann vom Prozessor interpretiert und ausgeführt. Auf diese Weise kann in einem angeschlossenen Gerät ein gerätespezifisches Kommando ausgeführt werden, ohne dass der Benutzer des Computers über besondere Rechte verfügen muss, da aus Sicht des Computers ja lediglich ein betriebssystemeigener normaler Schreibbefehl auf ein Gerät ausgeführt wird, das dem Benutzer gehört.

Je nach verwendeter Schnittstelle kann das Gerät beispielsweise die Form eines USB-Sticks oder eines Dongles haben. Das Gerät kann beispielsweise zur Überprüfung von Softwarelizenzen für bestimmte Anwendungsprogramme, Musikstücke oder Filme auf dem Computer geeignet sein. In diesem Fall sendet das Anwendungsprogramm eine Anfrage an das angeschlossene Gerät, ob eine Lizenz für das auszuführende Programm, das Musikstück oder den Film vorhanden ist. Die Lizenz ist in einem gerätespezifischen Format abgelegt, so dass die Informationen über das Vorhandensein einer gültigen Lizenz nur über ein gerätespezifisches Kommando abgefragt werden können. Der Benutzer selbst hat keinen Zugriff auf die im Gerät hinterlegte Lizenz. Er kann sie deshalb weder verändern noch manipulieren. Auf diese Weise ist eine einfache, sichere und robuste Lizenzierung von Software, Audio- oder Videodaten möglich. Auch können Lizenzen unterschiedlicher Anwendungsprogramme auf einem Gerät hinterlegt sein und kryptographische Befehle zum weiteren Schutz der Programme und Daten ausgeführt werden.

Das Gerät kann aber auch eine beliebige Steuereinheit sein, zum Beispiel zur Steuerung einer Heizungsanlage, einer Musikanlage, einer Lichtanlage.

Das Gerät kann nicht nur über eine USB-Schnittstelle an den Computer angeschlossen sein, sondern über jede beliebige Schnittstelle. Zum Anschluss eignen sich auch eine SCSI-Schnittstelle, Firewire-Schnittstelle, Infrarot-Schnittstelle oder ähnliche. Es ist auch möglich, das Gerät an eine interne Schnittstelle anzuschließen und das Gerät in den Computer zu integrieren.

Darüber hinaus kann das angeschlossene Gerät zusätzlich über einen Massenspeicher verfügen. In diesem Fall können auch herkömmliche Files oder Dateien auf dem Gerät im Massenspeicher abgespeichert werden. Das Gerät muss dann bei den empfangenen Files entscheiden, ob es sich um ein normales Datenfile handelt, das im Massenspeicher des Geräts abzulegen ist, oder ob die übertragene Datei ein spezielles File mit einem eingebetteten Kommando ist. Diese Unterscheidung wird in der Regel dadurch möglich, dass das spezielle File an einem bestimmten, aber flexiblen Speicherort abgespeichert ist, wenn es ein gerätespezifisches Kommando enthält. Das File hat dann eine besondere Adresse als logische Blockadresse und wird an einer bestimmten Stelle des logischen Blocksysterns scheinbar abgelegt. Ist der besondere Speicherort nicht angegeben, wird die Datei als gewöhnliches Datenfile behandelt und auf dem zugewiesenen Block des Massenspeichers abgelegt. Dies wird durch das auf dem Gerät vorhandene Filemanagement-System durchgeführt. Alternativ könnte das spezielle File auch am festen Speicherort abgelegt werden.

In einer besonderen Ausführung des erfindungsgemäßen Verfahrens wird das gerätespezifische Kommando nur dann ausgeführt, wenn das spezielle File eine Identifikation enthält. Die Identifikation kann in Form eines Merkers, eines Parameters oder einer ID vorliegen. Ist eine bestimmte ID im speziellen File gesetzt, so wird im Gerät erkannt, dass ein im File abgelegtes Kommando ausgeführt werden soll. Die Identifikation dient zur zusätzlichen Freigabe der Ausführung des Kommandos. Ist die Identifikation nicht vorhanden, also z.B. eine bestimmte ID nicht gesetzt, wird die Ausführung des Kommandos durch den Prozessor im Gerät verhindert.

Enthält das spezielle File keine Identifikation, kann das File an einem vorgegebenen Ort im logischen Blocksystem abgelegt werden. Der Speicherort kann dann das RAM des Gerätes oder auch ein nicht-flüchtiger Speicher sein, in der Regel der Datenspeicher des Geräts, in dem auch bestimmte Daten des Controllers abgelegt sein können. Damit kann ein spezielles File in einem Gerät gesichert werden. Wird das spezielle File im nicht-flüchtigen Speicher hinterlegt, bleibt es im Gerät gesichert, auch wenn das Gerät nicht mehr mit dem Computer verbunden ist. Somit kann eine Sicherung bzw. ein Backup des speziellen Files im Gerät vorgenommen werden.

Im Zuge des erfindungsgemäßen Verfahrens kann vom Prozessor des Geräts eine Antwort auf das ausgeführte Kommando erzeugt werden. Ist das auszuführende Kommando kein reiner Steuerbefehl, sondern soll eine beispielsweise Regelung vorgenommen oder eine Abfrage ausgeführt werden, so ist das Ergebnis der Ausführung des Kommandos eine Antwort. Die Antwort kann z.B. einen aktuellen Messwert oder eine Bestätigung der Ausführung des Kommandos enthalten. Das Resultat einer Abfrage kann beispielsweise der Status des Geräts sein. Dient das Gerät zur Lizenzierung von Software, so ist die Antwort ebenfalls das Ergebnis einer Abfrage. Die Antwort enthält dann entweder die Lizenz selbst oder, bei Vorhandensein einer Lizenz, die Freigabe der Ausführung der Software. Genauso kann die Antwort das Ergebnis eines kryptographischen Befehls beinhalten.

Bevorzugt wird nach dem erfindungsgemäßen Verfahren vom Prozessor ein Statusflag oder Merker im RAM-Speicher gesetzt oder in das spezielle File im nicht-flüchtigen Speicher geschrieben, anhand dessen beim nächsten Zugriff auf das File eine Antwort auf das ausgeführte Kommando erzeugt wird. Die Antwort wird erst dann erzeugt, sobald später ein weiterer Zugriff auf das File stattfindet, der Computer also von dem Gerät die Antwort abfragt. Damit wird sichergestellt, dass stets nur eine aktuelle Antwort auf ein vorausgehendes Kommando übermittelt wird. Dies ist beispielsweise dann wichtig, wenn das auszuführende Kommando eine Regelung in Gang setzt, bei der ein Sollwert eingeregelt werden soll. Als Antwort kann die aktuelle Regelgröße zurückgegeben werden, die natürlich nicht zu Beginn der Regelung, sondern erst zu einem späteren Zeitpunkt interessiert. Der Zeitpunkt kann von dem Anwendungsprogramm auf dem Computer bestimmt werden, indem auf das scheinbar im Gerät abgespeicherte File zugegriffen wird.

Wird die Antwort sogleich nach Ausführung des Kommandos erzeugt, kann sie in einem nicht-flüchtigen Speicher des Geräts zwischengespeichert werden. Sie steht dort bereit, bis das Anwendungsprogramm durch einen weiteren Schreib- oder Lesebefehl erneut auf das File im Gerät zugreift. Als nicht-flüchtiger Speicher kann im Gerät ein Flash-Speicher, ein ROM, ein EEPROM, ein Flash Memory vorgesehen sein.

Besonders bevorzugt weist das erfindungsgemäße Verfahren weitere Schritte zur Übertragung der Antwort auf: Ein Lesebefehl des Betriebssystems betreffend das spezielle File wird vom Computer an das Gerät gesendet. Der Lesebefehl wird im Gerät empfangen. In einem weiteren Schritt wird die Antwort in einem speziellen File abgelegt, die auf das ausgeführte Kommando erzeugt wird. Das spezielle File kann im RAM oder im nicht-flüchtigen Speicher des Geräts zwischengespeichert sein. Das spezielle File wird dadurch modifiziert. Im nächsten Schritt wird das spezielle File vom Gerät an den Computer in Ausführung des Lesebefehls rückübertragen.

Die Kommunikation zwischen dem Computer und dem Gerät findet über den im Betriebssystem des Computers implementierten Lesebefehl statt. Da das Gerät selbst kein Versenden eines Files oder einer Antwort initiieren kann, muss der Computer bzw. das auf dem Computer ausgeführte Anwendungsprogramm das Auslesen des speziellen Files anstoßen. Zur Ausführung des Lesebefehls des Betriebssystems sind wiederum keine besonderen Rechte notwendig.

Der Prozessor des Geräts empfängt den Lesebefehl und erkennt, dass das spezielle File zurückgelesen werden soll. Im Unterschied zum Lesen eines normalen Datenfiles wird nun nicht die unveränderte Datei zurückgesendet. Stattdessen ermittelt der Prozessor die durch das ausgeführte Kommando erzeugte Antwort und erstellt hieraus eine Sequenz, die der eines Files entspricht. Alternativ kann auch aus der Antwort eine Sequenz erstellt werden, die der eines speziellen Files entspricht. Anstelle des Lesens und Zurückspeichern eines (unveränderten) Files wird die Antwort auf das ausgeführte Kommando in einem Zwischenspeicher temporär abgelegt. In diesem Fall greift der Prozessor auf diesen Zwischenspeicher zu und liest die Antwort daraus aus. Wird als Antwort beispielsweise eine Lizenz erfragt, so werden die Lizenzdaten erst beim Rücksenden vom Prozessor des Geräts erzeugt und in das spezielle File geschrieben.

Vorteilhafterweise erkennt der Prozessor, dass beim Schreiben des speziellen Files in dem Gerät ein Kommando ausgeführt wurde. Bevorzugt wird die Ausführung des Kommandos dadurch erkannt, dass eine Identifikation im RAM oder im speziellen File vorhanden ist. Dies kann beispielsweise ein gesetztes Flag, ein Merker oder ein bestimmtes Bit im speziellen File sein. Ist die Identifikation in dem speziellen File nicht vorhanden, erkennt der Prozessor beim Ausführen des Lesebefehls, dass keine Antwort erzeugt wurde. In diesem Fall handelt es sich um eine Sicherung bzw. um ein Backup des speziellen Files, das zurückgesichert werden soll.

Erkennt der Prozessor des Geräts, dass das auszulesende File kein spezielles File ist, es sich vielmehr um ein ganz normales Datenfile handelt, so wird dieses unverändert zurückgesendet.

In einer besonders bevorzugten Ausführung weist das erfindungsgemäße Verfahren ferner die folgenden Schritte auf: Empfangen des speziellen rückübertragenen Files auf dem Computer. Anschließendes Erkennen durch das Anwendungsprogramm, dass das spezielle File eine Antwort enthält. Im Weiteren wird die Antwort aus dem File ausgelesen und im Anwendungsprogramm weiterverarbeitet. Das Anwendungsprogramm erkennt, dass ein spezielles File vom Gerät rückübertragen wurde. Es unterscheidet dabei zwischen einem speziellen File und einer normalen Datei. Dass ein spezielles File rückübertragen wurde, erkennt das Anwendungsprogramm daran, dass das File eine Identifikation enthält, die vom Prozessor des Geräts gemeinsam mit der Antwort in dem File hinterlegt wurde.

Das Anwendungsprogramm auf dem Computer erkennt dann, dass das zurückgeschriebene spezielle File die Antwort auf das ausgeführte Kommando enthält. Wurde vom Prozessor des Geräts eine Antwort in dem speziellen File abgelegt, wird gleichzeitig vom Prozessor auch ein Merker gesetzt. Dieser Merker kann in Form eines Statusbit oder einer ID im File vorhanden sein. Das Anwendungsprogramm identifiziert diesen Merker und stellt fest, dass eine Antwort vom Prozessor des Geräts zurückgeliefert wird. Die Antwort wird dann im Anwendungsprogramm entsprechend weiter verarbeitet.

Wird ein spezielles File ohne Merker zurückgelesen, so erkennt das Anwendungsprogramm, dass das spezielle File keine Antwort enthält. In diesem Fall wird also lediglich ein auf dem Gerät gesichertes spezielles File unverändert zurückgelesen.

In einer besonderen Anwendung des erfindungsgemäßen Verfahrens ist die Antwort auf das ausgeführte Kommando ein Gerätestatus oder eine Fehlermeldung. Der Gerätestatus wird als Antwort zurückgegeben, wenn eine entsprechende Abfrage an das Gerät übermittelt wurde. Diese Information kann dann wichtig sein, wenn eine Regelung im Gerät angestoßen werden soll und vorher der aktuelle Istwert der Regelgröße bestimmt werden muss. Auch wenn das Gerät verschiedene Status annehmen kann, ist eine Information über den momentanen Gerätestatus wichtig. Das Anwendungsprogramm kann auf Grundlage dieser Information weitere Routinen abarbeiten und vom Status abhängige Kommandos an das Gerät senden.

Ebenfalls kann die Antwort aus den Ergebnisdaten eines kryptographischen Befehls bestehen.

Die Antwort ist eine Fehlermeldung, wenn während der Ausführung des vorher übertragenen Kommandos im Gerät ein Fehler aufgetreten ist oder das Kommando nicht abgearbeitet bzw. die Ausführung des Kommandos abgebrochen wurde. Das Anwendungsprogramm kann daraufhin erneut ein Kommando an das Gerät senden oder die Abarbeitung einer Routine unterbrechen.

Anhand der nachstehenden Abbildungen wird die vorliegende Erfindung genauer erläutert; eine bevorzugte Ausführungsform wird in den Zeichnungen beschrieben. Es zeigen:
- Figur 1: die Filesyteme eines Computers und eines angeschlossenen Datenverarbeitungsgeräts;
- Figur 2: das Filesystem des Computers von Figur 1 und das Filesy- stern eines angeschlossenen Datenverarbeitungsgeräts mit erweiteter Funktionalität;
- Figur 3: ein Ablaufdiagramm des Verfahrens zur Steuerung des Ge- räts von Figur 2.

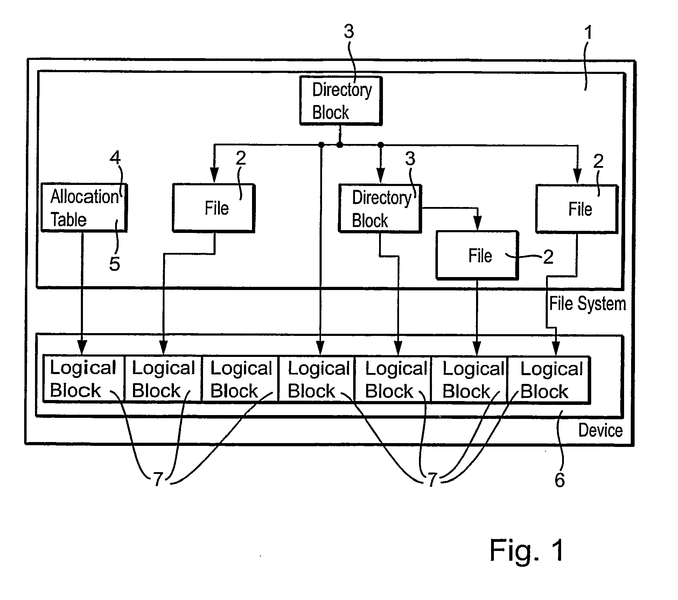

Figur 1 zeigt das Filesystem des Computers 1, wie es sich dem Benutzer oder dem Betriebssystem des Computers 1 darstellt. Die in einem File 2 abgelegten Daten sind in einer hierarchischen Baumstruktur organisiert. Die einzelnen Files 2 sind Ordnern 3 zugeordnet, so genannten directory blocks. Zusätzlich weist das Filesystem des Computers 1 eine Zugriffstabelle 4 (allocation table) auf, in der Informationen über den physikalischen Speicherort hinterlegt sind. Die Zugriffstabelle 4 enthält die logischen Blockadressen 5, so genannte logical block addresses (LBA). Das Filesystem greift auf die Blockadresse 5 zu, um Daten auf ein Speichermedium zu schreiben oder von diesem zu lesen.

Ein Datenverarbeitungsgerät 6 ist über eine Schnittstelle an den Computer 1 angeschlossen. Der Computer 1 erkennt, dass das Gerät 6 ein Speichermedium ist. Das Filesystem des Computers 1 speichert Daten auf dem Gerät 6 in einer fortlaufenden Liste von Datenblöcken 7, die mit logischen Blockadressen 5 bezeichnet sind. Der Datenblock 7 hat typischerweise die Länge eines physikalischen Sektors oder ein Vielfaches dieser Länge. Die Länge ist jedoch fest vorgegeben für das Filesystem.

Damit der Computer 1 ein File 2 auf einem Gerät 6 speichern kann, muss die hierarchische Struktur dessen Filesystems in die Blockstruktur des Speichersystems des Geräts 6 übertragen werden. Diese Konvertierung geschieht über zusätzliche Management-Informationen, die ebenfalls in der Zugriffstabelle 4 abgelegt sind.

Beim Zugriff auf ein Speichermedium hat das Filesystem die Berechtigung, einem File 2 eine bestimmte Blockadresse 5 zuzuweisen. Die Zuweisung wird auch in der Zugriffstabelle 4 abgelegt.

Das Filesystem ist Teil des Betriebssystems des Computers 1 und als Software implementiert. Das Gerät 6 selbst kann nur die fortlaufende Liste der Datenblöcke 7 abarbeiten und die datenblockbasierten Schreib- oder Lesebefehle ausführen, die es als spezifische logische Blockadresse 5 für den Zugriff erhält. Die Daten werden lediglich gelesen oder geschrieben. Das Gerät 6 analysiert oder interpretiert den Dateninhalt nicht.

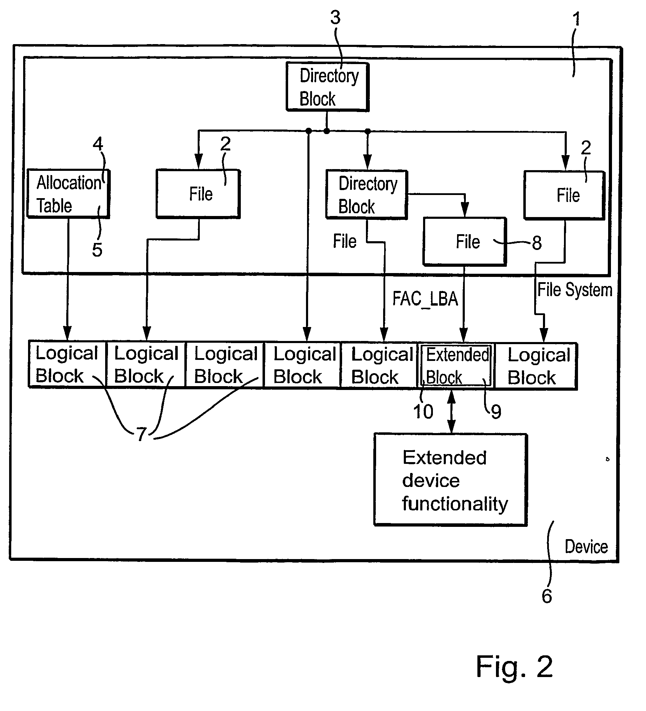

Figur 2 zeigt zunächst den Computer 1 mit seinem hierarchischen Filesystem, wie es schon aus Figur 1 bekannt ist. Ein spezielles File 8 aus dem hierarchischen Filesystem wird an einer bestimmten Stelle im Filesystem des Geräts 6 abgelegt. An der bestimmten Stelle ist ein spezieller Datenblock 9 vorhanden, der eine spezielle Blockadresse 10 aufweist. Der spezielle Datenblock 9 wird dadurch angesprochen, dass ein spezielles File 8 an die spezielle Blockadresse 10 adressiert wird. Das spezielle File 8 wird an einer bestimmten, aber flexiblen Blockadresse 10 abgespeichert. Es wird also in den Datenblock 9 geschrieben oder von ihm ausgelesen. Dies geschieht über die betriebssystemeigenen Schreib- oder Lesebefehle.

Der Prozessor des Geräts 6 kann den speziellen Datenblock 9 interpretieren und darin abgelegte geräteeigene Operationen ausführen. Die Operationen sind gerätespezifische Kommandos, wie Steuerbefehle, das Auslesen des Gerätestatus, oder das Lesen bzw. Speichern von gerätespezifischen Daten oder das Ausführen kryptographischer Befehle. Die Kommandos umfassen auch das Interpretieren von spezifischen Daten und das Abspeichern in einer gerätespezifischen Art, beispielsweise im RAM des Geräts 6.

Empfängt das Gerät 6 vom Computer 1 einen betriebssystemeigenen Schreibbefehl, der die spezielle Blockadresse 10 anstelle der normalen Blockadresse 5 adressiert, führt das Gerät 6 nicht den Standardschreibbefehl des Betriebssystems aus, sondern aktiviert den geräteeigenen Kommandoausführer, den so genannten Execution Handler. Der Execution Handler interpretiert den speziellen Datenblock 9. Das im speziellen File 8 übertragene und im speziellen Datenblock 9 abgelegte Kommando wird vom Execution Handler ausgeführt.

Wird auf das ausgeführte gerätespezifische Kommando eine Antwort erzeugt, so wird diese Antwort entweder in dem speziellen Datenblock 9 abgelegt oder aber im RAM des Geräts bereitgehalten. Alternativ kann anstelle der Antwort auch eine spezielle Statusinformation in dem speziellen Datenblock 9 abgelegt werden, so dass die Antwort auf das ausgeführte Kommando erst ermittelt wird, wenn der nächste Lesebefehl des Betriebssystems auf die spezielle Blockadresse 10 des speziellen Datenblocks 9 zugreifen will.

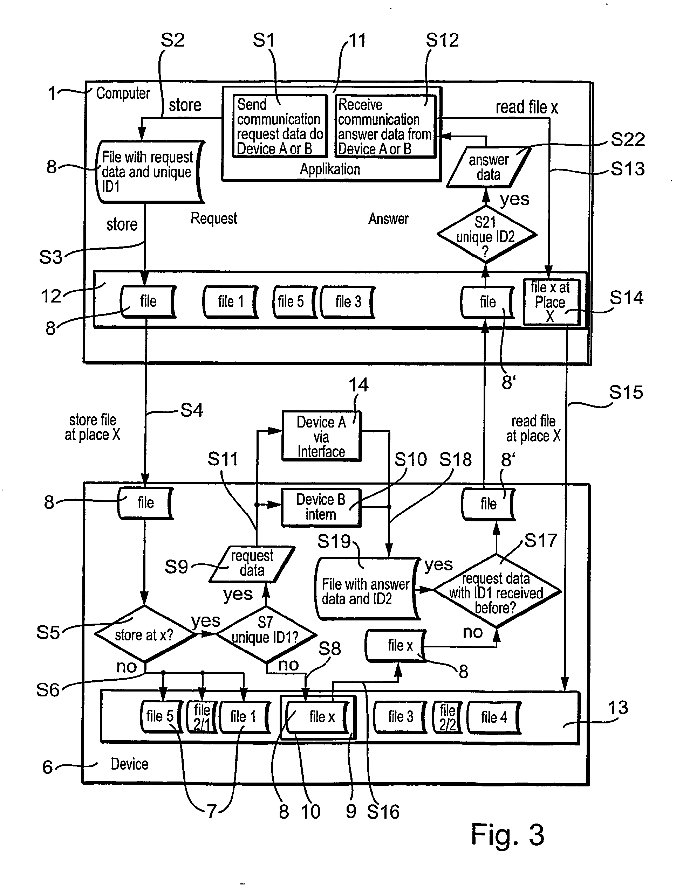

Figur 3 zeigt das prinzipielle Ablaufschema des erfindungsgemäßen Verfahrens. Ein Teil des Verfahrens läuft in dem Computer 1 ab; der andere Teil in dem Gerät 6.

In einem ersten Schritt S 1 startet ein Anwendungsprogramm 11 eine Anfrage an das Gerät 6. Dazu wird ein gerätespezifisches Kommando in einem Schritt S 2 gemeinsam mit einem Identifikationsmerker in ein spezielles File 8 geschrieben.

Im nächsten Schritt S 3 wird das spezielle File 8 an das Filesystem 12 des Betriebssystems des Computers 1 übergeben mit der Aufforderung, das spezielle File 8 im Gerät 6 zu speichern. Das Betriebssystem des Computers 1 sendet im Schritt S 4 das spezielle File 8 mittels des Schreibbefehls an das Gerät 6. Zur Adressierung des speziellen Files 8 wird die spezielle Blockadresse 10 angegeben.

In einem fünften Schritt S 5 empfängt der Prozessor des Geräts 6 das spezielle File 8. In diesem Schritt wird vom Prozessor geprüft, ob das empfangene File 8 an die spezielle Blockadresse 10 adressiert ist.

Ist keine spezielle Blockadresse 10, sondern eine normale Blockadresse 5 in dem File adressiert, wird das File 8 im sechsten Schritt S 6 im Speichersystem 13 des Geräts 6 im Datenblock 7 abgespeichert.

Wird jedoch die spezielle Blockadresse 10 ermittelt, so prüft der Prozessor in einem Schritt S 7, ob das spezielle File einen Identifikationsmerker aufweist. Ist kein Identifikationsmerker im speziellen File 8 vorhanden, wird im Schritt S 8 das spezielle File 8 im speziellen Datenblock 9 mit der speziellen Datenblockadresse 10 gespeichert.

Weist das spezielle File 8 einen Identifikationsmerker auf, wird im Schritt S 9 das gerätespezifische Kommando aus dem speziellen File 8 ausgelesen. Im Schritt S 10 wird dann das gerätespezifische Kommando vom Prozessor des Geräts 6 ausgeführt.

Anstelle des Schritts S 10 kann auch der Schritt S 11 ausgeführt werden. Das im speziellen File 8 hinterlegte gerätespezifische Kommando wird an ein externes Gerät 14 übertragen, das über eine Schnittstelle mit dem Gerät 6 verbunden ist. Das externe Gerät 14 wird auf diese Weise vom Gerät 6 angesteuert. Dabei wird ein Kommando an das externe Gerät 14 übergeben und dort verarbeitet.

Wird bei der Ausführung des gerätespezifischen Kommandos im Schritt S 10 eine Antwort bzw. ein Ergebnis erzeugt, kann das Gerät 6 die Antwort nicht eigenständig an den Computer 1 zurückgeben. Vielmehr muss das Anwendungsprogramm 11 auf dem Computer 1 eine Anfrage an das Gerät 6 senden und die Antwort vom Gerät 6 abholen. Dies wird in den Schritten S 12 bis S 22 durchgeführt.

In dem Schritt S 12 erzeugt das Anwendungsprogramm 11 eine Abfrage, das spezielle File 8 aus dem Gerät 6 auszulesen. Die Anfrage wird zunächst an das Filesystem 12 des Computers 1 übermittelt. Im Schritt S 13 wird folglich der betriebssystemeigene Lesebefehl zum Auslesen einer "normalen" Datei an das Filesystem 12 gesandt, da dem Computer 1 und seinem Betriebssystem ein Massenspeicher als Gerät 6 vorgetäuscht wird.

Im Schritt S 14 wird der Lesebefehl so umgesetzt, dass vom Filesystem 12 die Aufforderung ergeht, das spezielle File 8 von der speziellen logischen Blockadresse 10 auszulesen. Im Schritt S 15 wird der betriebssystemeigene Lesebefehl vom Filesystem 12 an das Gerät 6 übermittelt und dann vom Speichersystem 13 des Geräts 6 empfangen.

Der Prozessor des Geräts 6 liest im Schritt S 16 die spezielle Blockadresse 10 des speziellen Datenblocks 9 aus, so dass das spezielle File 8 zur Rückgabe an den Computer 1 vorbereitet wird.

Im Schritt S 17 prüft der Prozessor des Geräts 6, ob bei der Ausführung des betriebssystemeigenen Schreibbefehls des Computers 1 ein gerätespezifisches Kommando ausgeführt wurde. Dazu wird der Identifikationsmerker des speziellen Files 8 abgefragt. Wurde zuvor kein gerätespezifisches Kommando zu dem Gerät 6 gesendet, ist kein Identifikationsmerker in das spezielle File 8 geschrieben worden, welches an der speziellen Blockadresse 10 steht. Ist der Identifikationsmerker nicht im File 8 oder im RAM enthalten, wird das File 8 an den Computer 1 unverändert zurückgesendet.

Erkennt der Prozessor des Geräts 6, dass der Identifikationsmerker im speziellen File 8 vorhanden ist, wird in einem Schritt S 18 die Antwort auf das ausgeführte gerätespezifische Kommando vom Prozessor erfragt. Wurde das gerätespezifische Kommando an ein externes Gerät 14 weitergereicht, wird eine Antwort von dem externen Gerät 14 ermittelt.

Ist die Antwort auf das ausgeführte gerätespezifische Kommando vorhanden, wird sie in einem Schritt S 19 in das spezielle File 8 geschrieben. Zusätzlich wird ein weiterer Merker in das spezielle File 8 geschrieben. Der weitere Merker ist ein Antwortmerker oder eine ID, der das Vorhandensein einer Antwort auf ein ausgeführtes Kommando kennzeichnet. Damit ist das ursprünglich mit dem Schreibbefehl an das Gerät 6 gesendete spezielle File 8 modifiziert und verändert worden. Es enthält nun nicht mehr das auszuführende Kommando, sondern die auf das Kommando erzeugte Antwort. Das modifizierte spezielle File 8' wird nun in Ausführung des betriebssystemeigenen Lesebefehls des Computers 1 an das Filesystem 12 des Computers 1 übergeben (Schritt S 20).

Das Anwendungsprogramm 11 ruft das modifizierte spezielle File 8' vom Filesystem 12 ab. Dabei prüft es in einem Schritt S 21, ob der Antwortmerker im speziellen File 8' gesetzt ist.

Anhand des Antwortmerkers im modifizierten speziellen File 8' erkennt das Anwendungsprogramm 11 im Schritt S 22, dass das spezielle File 8' die Antwort auf das auszuführende Kommando enthält. Die Antwort wird nun vom Anwendungsprogramm 11 aus dem speziellen File 8' ausgelesen und weiterverarbeitet. Ist die Antwort eine Fehlermeldung, wird dies bei der Auswertung durch das Anwendungsprogramm 11 erkannt.

Wird im Schritt S 18 keine Antwort vom Prozessor des Geräts 6 zurückgegeben, wird das File 8 zurückgeschrieben. In diesem Fall wird jedoch im Schritt S 20 der Antwortmerker nicht gesetzt. Das nicht modifizierte spezielle File 8 enthält dann nicht den Antwortmerker. Das spezielle File 8 wird zwar auch an den Computer 1 übertragen, die Abfrage in Schritt S 21 zeigt aber, dass der Antwortmerker nicht gesetzt ist. Das Anwendungsprogramm 11 erkennt also, dass das spezielle File 8 nicht die Antwort auf das auszuführende Kommando enthält, sondern ein Fehler aufgetreten ist.

### Zusammenstellung der Bezugszeichen

- 1: Computer
- 2: File
- 3: Ordner
- 4: Zugriffstabelle
- 5: Blockadresse
- 6: Gerät
- 7: Datenblock
- 8, 8': Spezielles File
- 9: Spezieller Datenblock
- 10: Spezielle Blockadresse
- 11: Anwendungsprogramm
- 12: Filesystem (von 1)
- 13: Speichersystem (von 6)
- 14: Externes Gerät

## Patentansprüche

1. Verfahren zum Steuern eines Datenverarbeitungsgeräts, das über eine Schnittstelle an einen Computer angeschlossen ist, umfassend
- Erzeugen eines gerätespezifischen Kommandos durch ein Anwendungsprogramm (11) auf dem Computer (1);
**dadurch gekennzeichnet, dass** das Datenverarbeitungsgerät
- ein Speichermedium mit einem Filesystem simuliert,
- einen dedizierten Bereich mit einer Blockadresse (10) aufweist, und
- einen Kommandoausführer zum Ausführen gerätespezifischer Kommandos umfasst,
und
**gekennzeichnet durch** die folgenden Schritte:
- Ablegen des Kommandos in einem speziellen File (8);
- Übertragen des speziellen Files (8) vom Computer (1) an das Gerät (6) über die Schnittstelle **durch** Adressierung des Files (8) an eine Blockadresse (10) mittels des Schreibbefehls des Betriebssystems des Computers (1) zum Schreiben von Files auf Speichermedien;
- Empfangen des an die Blockadresse adressierten speziellen Files (8) **durch** das Gerät (6);
- Auslesen des gerätespezifischen Kommandos aus dem speziellen File (8) in dem Gerät (6) mittels des Kommandoausführers;
- Ausführen des aus dem speziellen File (8) ausgelesenen gerätespezifischen Kommandos **durch** den Kommandoausführer des Geräts (6).

2. Verfahren nach Anspruch 1, **dadurch gekennzeichnet, dass** das Kommando ausgeführt wird, wenn das spezielle File (8) eine Identifikation enthält.

3. Verfahren nach Anspruch 1 oder 2, **dadurch gekennzeichnet, dass** vom Prozessor des Geräts (6) auf das ausgeführte Kommando eine Antwort erzeugt wird.

4. Verfahren nach Anspruch 1 oder 2, **dadurch gekennzeichnet, dass** vom Prozessor ein Statusbit in das RAM des Geräts (6) oder in das spezielle File (8) geschrieben wird, anhand dessen beim nächsten Zugriff auf das File (8) eine Antwort auf das ausgeführte Kommando erzeugt wird.

5. Verfahren nach Anspruch 3 oder 4, **dadurch gekennzeichnet, dass** die Antwort in einem flüchtigen oder nicht-flüchtigen Speicher des Geräts (6) zwischengespeichert wird.

6. Verfahren nach Anspruch 3, **gekennzeichnet durch** die weiteren Schritte:
- Senden eines Lesebefehls des Betriebssystems betreffend das spezielle File (8) vom Computer (1) an das Gerät (6);
- Empfangen des Lesebefehls im Gerät (6);
- Ablegen der im Gerät (6) erzeugten Antwort in dem speziellen File (8'), das **dadurch** modifiziert wird;
- Rückübertragen des speziellen Files (8') von dem Gerät (6) an den Computer (1) in Ausführung des Lesebefehls.

7. Verfahren nach Anspruch 6, **gekennzeichnet durch** die folgenden Schritte:
- Empfangen des rückübertragenen speziellen Files (8') **durch** den Computer (1);
- Erkennen, dass das spezielle File (8') eine Antwort enthält; und
- Auslesen der Antwort aus dem speziellen File (8') und Weiterverarbeiten der Antwort im Anwendungsprogramm (11).

8. Verfahren nach einem der Ansprüche 3 bis 7, **dadurch gekennzeichnet, dass** die vom Prozessor des Geräts (6) erzeugte Antwort der Gerätestatus oder eine Fehlermeldung ist.

9. Verfahren nach einem der Ansprüche 3 bis 8, **dadurch gekennzeichnet, dass** das spezielle File (8) anhand seiner speziellen, flexiblen Blockadresse (10) identifiziert wird.

10. Verfahren nach einem der vorhergehenden Ansprüche, **dadurch gekennzeichnet, dass** das spezielle File (8) nicht auf einen Massenspeicher des Geräts (6) geschrieben oder von einem Massenspeicher des Geräts (6) gelesen wird.

11. System zum Steuern eines Datenverarbeitungsgeräts umfassend einen Computer mit einem Betriebssystem und einem Datenverarbeitungsgerät mit einem Prozessor, das über eine Schnittstelle an den Computer angeschlossen ist,
**dadurch gekennzeichnet, dass**
das Datenverarbeitungsgerät
- ein Speichermedium mit einem Filesystem simuliert,
- einen dedizierten Bereich mit einer Blockadresse (10) aufweist, und
- einen Kommandoausführer zum Ausführen gerätespezifischer Kommandos umfasst,
und
- durch ein Anwendungsprogramm (11) auf dem Computer (1) ein gerätespezifisches Kommando erzeugt wird und das Kommando in einem speziellen File (8) auf dem Computer (1) abgelegt wird,
- das spezielle File (8) durch Adressierung des Files (8) an die Blockadresse (10) unter Verwendung des Schreibbefehls des Betriebssystems des Computers (1) über die Schnittstelle des Computers (1) an das angeschlossene Gerät (6) übertragen wird,
- das Gerät (2) zum Empfangen des an die Blockadresse (10) adressierten speziellen Files (8) und zum Auslesen des gerätespezifischen Kommandos aus dem speziellen File (8) mittels des Kommandoausführers eingerichtet ist, und
- der Kommandoausführer des Geräts (6) das ausgelesene spezifische Kommando ausführt.

12. System nach Anspruch 11, **dadurch gekennzeichnet, dass** der Kommandoausführer des Geräts (6) das gerätespezifische Kommando ausführt, wenn das spezielle File (8) eine Identifikation enthält.

13. System nach Anspruch 11 oder 12, **dadurch gekennzeichnet, dass** von dem Prozessor des Geräts (6) auf das ausgeführte gerätespezifische Kommando eine Antwort erzeugt wird.

14. System nach Anspruch 13, **dadurch gekennzeichnet, dass**
- der Computer (1) einen Lesebefehl des Betriebssystems betreffend das spezielle File (8) an das Gerät (6) sendet,
- das Gerät (6) nach dem Empfangen des Lesebefehls die in dem Gerät (6) erzeugte Antwort in dem speziellen File (8') ablegt, wodurch das spezielle File (8) modifiziert wird, und
- das Gerät in Ausführung des Lesebefehls des Betriebssystems des Computers (1) das spezielle File (8') an den Computer (1) rücküberträgt.

15. System nach einem der Ansprüche 11 bis 14, **dadurch gekennzeichnet, dass** das Gerät (6), an welches das spezielle File (8) mittels des Schreibbefehls des Betriebssystems übertragen wird, keinen Massenspeicher zum Speichern von Files umfasst.

16. System nach einem der Ansprüche 11 bis 15, **dadurch gekennzeichnet, dass** die Schnittstelle des Computers (1) eine USB-Schnittstelle oder eine SCSI-Schnittstelle ist.

17. System nach einem der Ansprüche 11 bis 16, **dadurch gekennzeichnet, dass** der Kommandoausführer zum Ausführen des ausgelesenen gerätespezifischen Kommandos in einen externen Gerät (14) angeordnet ist.

18. Gerät zum Ausführen eines auf einem Computer erzeugten gerätespezifischen Kommandos, mit einer Schnittstelle zum Anschluss an einen Computer, auf dem ein Anwendungsprogramm das gerätespezifische Kommando erzeugt und in einem speziellen File ablegt, und mit einem Prozessor, **dadurch gekennzeichnet, dass**
das Datenverarbeitungsgerät (6)
- ein Speichermedium mit einem Filesystem simuliert,
- einen dedizierten Bereich mit einer Blockadresse (10) aufweist, und
- einen Kommandoausführer zum Ausführen gerätespezifischer Kommandos umfasst, und
- das Gerät (6) nach dem Empfang des an die Blockadresse (10) adressierten speziellen Files (8) über die Schnittstelle des Computers (1), das durch Adressierung des Files (8) an eine Blockadresse (10) mittels des Schreibbefehls des Betriebssystems des Computers (1) an das Gerät (6) übertragen wird, das gerätespezifische Kommando aus dem speziellen File (8) mittels des Kommandoausführers ausliest und
- der Kommandoausführer des Geräts (6) das ausgelesene gerätespezifische Kommando ausführt.

19. Gerät nach Anspruch 18, **dadurch gekennzeichnet, dass** es keinen Massenspeicher zum Speichern von Files umfasst.

## Claims

1. Method of controlling a data processing device which is connected to a computer via an interface, comprising
- generation of a device-specific command by an application program (11) on the computer (1);
**characterised in that** the data processing device
- simulates a storage medium with a file system,
- has a dedicated area with a block address (10), and
- comprises a command executor for execution of device-specific commands,
and **characterised by** the following steps:
- storage of the command in a special file (8);
- transmission of the special file (8) from the computer (1) to the device (6) via the interface by addressing of the file (8) to a block address (10) by means of the write command of the operating system of the computer (1) for the writing of files to storage media;
- reception by the device (6) of the special file (8) addressed to the block address;
- reading of the device-specific command from the special file (8) in the device (6) by means of the command executor;
- execution of the device-specific command read from the special file (8) by the command executor of the device (6).

2. Method as claimed in Claim 1, **characterised in that** the command is executed when the special file (1) contains an identification.

3. Method as claimed in either Claim 1 or Claim 2, **characterised in that** a response to the executed command is generated by the processor of the device (6).

4. Method as claimed in either Claim 1 or Claim 2, **characterised in that** the processor writes a status bit into the RAM of the device (6) or into the special file (8), a response to the executed command being generated at the next access to the file (8) with the aid of the said status bit.

5. Method as claimed in either Claim 3 or Claim 4, **characterised in that** the response is buffered in a volatile or non-volatile memory of the device (6).

6. Method as claimed in Claim 3, **characterised by** the additional steps:
- transmission of a read command of the operating system concerning the special file (8) from the computer (1) to the device (6);
- reception of the read command in the device (6);
- storage of the response generated in the device (6) in the special file (8') which is thereby modified;
- return of the special file (8') from the device (6) to the computer (1) in execution of the read command.

7. Method as claimed in Claim 6, **characterised by** the following steps:
- reception of the returned special file (8') by the computer (1);
- recognition that the special file (8') contains a response; and
- reading the response from the special file (8') and further processing of the response in the application program (11).

8. Method as claimed in any one of Claims 3 to 7, **characterised in that** the response generated by the processor of the device (6) is the device status or an error message.

9. Method as claimed in any one of Claims 3 to 8, **characterised in that** the special file (8) is identified with the aid of its special flexible block address (10).

10. Method as claimed in any one of the preceding claims, **characterised in that** the special file (8) is not written onto a mass memory of the device or read from a mass memory of the device (6).

11. System for control of a data processing device comprising a computer with an operating system and a data processing device with a processor which is connected to the computer via an interface, **characterised in that** the data processing device
- simulates a storage medium with a file system,
- has a dedicated area with a block address (10), and
- comprises a command executor for execution of device-specific commands, and
- a device-specific command is generated by an application program (11) on the computer (1) and the command is stored in a special file (8) on the computer (1),
- the special file (8) is transmitted to the connected device (6) via the interface of the computer (1) by addressing of the file (8) to the block address (10) using the write command of the operating system of the computer (1),
- the device (2) is designed for reception of the special file (8) addressed to the block address (10) and for reading of the device-specific command from the special file (8) by means of the command executor; and
- the command executor of the device (6) executes the read specific command.

12. System as claimed in Claim 11, **characterised in that** the command executor of the device (6) executes the device-specific command when the special file (8) contains an identification.

13. System as claimed in either Claim 11 or Claim 12, **characterised in that** a response to the executed device-specific command is generated by the processor of the device (6).

14. System as claimed in Claim 13, **characterised in that**
- the computer (1) transmits a read command of the operating system concerning the special file (8) to the device (6),
- after reception of the read command the device (6) stores the response generated in the device (6) in the special file (8'), whereby the special file (8) is modified, and
- the device returns the special file (8') to the computer (1) in execution of the read command of the operating system of the computer (1).

15. System as claimed in any one of Claims 11 to 14, **characterised in that** the device (6), to which the special file (8) is transmitted by means of the write command of the operating system, comprises no mass memory for storage of files.

16. System as claimed in any one of Claims 11 to 15, **characterised in that** the interface of the computer (1) is a USB interface or a SCSI interface.

17. System as claimed in any one of Claims 11 to 15, **characterised in that** the command executor for execution of the read device-specific command is disposed in an external device (14).

18. Apparatus for execution of a device-specific command generated on a computer, with an interface for connection to a computer on which an application program generates the device-specific command and stores it in a special file, and with a processor, **characterised in that** the data processing device (6)
- simulates a storage medium with a file system,
- has a dedicated area with a block address (10), and
- comprises a command executor for execution of device-specific commands, and
- after reception via the interface of the computer (1) of the special file (8) which is addressed to the block address (10) and is transmitted to the device (6) by means of the write command of the operating system of the computer (1), the device (6) reads the device-specific command from the special file (8) by means of the command executor, and
- the command executor of the device (6) executes the read device-specific command.

19. Device as claimed in Claim 18, **characterised in that** it comprises no mass memory for storage of files.

## Revendications

1. Procédé pour commander un appareil de traitement de données qui est connecté à un ordinateur par l'intermédiaire d'une interface, comprenant
- la génération d'une commande spécifique à l'appareil par un programme d'application (11) sur l'ordinateur (1) ;
**caractérisé en ce que** l'appareil de traitement de données
- simule un support de mémoire avec un système de fichiers,
- présente une zone dédiée avec une adresse de bloc (10), et
- comporte un exécuteur de commandes pour exécuter des commandes spécifiques à l'appareil,
et
**caractérisé en ce qu'**il comprend les étapes suivantes :
- mémorisation de la commande dans un fichier spécifique (8) ;
- transmission du fichier spécifique (8) de l'ordinateur (1) à l'appareil (6) par l'intermédiaire de l'interface par adressage du fichier (8) à une adresse de bloc (10) au moyen de l'instruction d'écriture du système d'exploitation de l'ordinateur (1) pour inscrire des fichiers sur des supports de mémoire ;
- réception du fichier spécifique (8) adressé à l'adresse de bloc par l'appareil (6);
- lire la commande spécifique à l'appareil du fichier spécifique (8) dans l'appareil (6) au moyen de l'exécuteur de commande ;
- exécution de la commande spécifique à l'appareil lue du fichier spécifique (8) par l'exécuteur de commande de l'appareil (6).

2. Procédé selon la revendication 1, **caractérisé en ce que** la commande est exécutée si le fichier spécifique (8) contient une identification.

3. Procédé selon la revendication 1 ou 2, **caractérisé en ce que** le processeur de l'appareil (6) génère une réponse à la commande exécutée.

4. Procédé selon la revendication 1 ou 2, **caractérisé en ce que** le processeur inscrit dans la mémoire RAM de l'appareil (6) ou dans le fichier spécifique (8) un bit d'état, à l'aide duquel une réponse à la commande exécutée est générée lors de l'accès suivant au fichier (8).

5. Procédé selon la revendication 3 ou 4, **caractérisé en ce que** la réponse est enregistrée temporairement dans une mémoire volatile ou non volatile de l'appareil (6).

6. Procédé selon la revendication 3, **caractérisé en ce qu'**il comprend les étapes suivantes :
- envoi d'une instruction de lecture du système d'exploitation concernant le fichier spécifique (8) de l'ordinateur (1) à l'appareil (6) ;
- réception de l'instruction de lecture dans l'appareil (6) ;
- mémorisation de la réponse générée dans l'appareil (6) dans le fichier spécifique (8'), qui est ainsi modifié ;
- transmission en retour du fichier spécifique (8') de l'appareil (6) à l'ordinateur (1) dans l'exécution de l'instruction de lecture.

7. Procédé selon la revendication 6, **caractérisé en ce qu'**il comprend les étapes suivantes :
- réception du fichier spécifique (8') transmis en retour par l'ordinateur (1) ;
- détection du fait que le fichier spécifique (8') contient une réponse ; et
- lecture de la réponse du fichier spécifique (8') et poursuite du traitement de la réponse dans le programme d'application (11).

8. Procédé selon une des revendications 3 à 7, **caractérisé en ce que** la réponse générée par le processeur de l'appareil (6) est l'état de l'appareil ou un message d'erreur.

9. Procédé selon une des revendications 3 à 8, **caractérisé en ce que** le fichier spécifique (8) est identifié à l'aide de son adresse de bloc (10) spécifique flexible.

10. Procédé selon une des revendications précédentes, **caractérisé en ce que** le fichier spécifique (8) n'est ni inscrit dans une mémoire de masse de l'appareil (6) ni lu par une mémoire de masse de l'appareil (6).

11. Système pour commander un appareil de traitement de données, comprenant un ordinateur doté d'un système d'exploitation et d'un appareil de traitement de données muni d'un processeur, qui est connecté à l'ordinateur par l'intermédiaire d'une interface,
**caractérisé en ce que**
l'appareil de traitement de données
- simule un support de mémoire avec un système de fichiers,
- présente une zone dédiée avec une adresse de bloc (10), et
- comporte un exécuteur de commandes pour exécuter des commandes spécifiques à l'appareil,
et
- une commande spécifique à l'appareil est générée par un programme d'application (11) sur l'ordinateur (1), et la commande est mémorisée dans un fichier spécifique (8) sur l'ordinateur (1) ;
- le fichier spécifique (8) est transmis à l'appareil (6) connecté par l'intermédiaire de l'interface de l'ordinateur (1) par adressage du fichier (8) à l'adresse de bloc (10) en utilisant l'instruction d'écriture du système d'exploitation de l'ordinateur (1) ;
- l'appareil (6) est conçu pour recevoir le fichier spécifique (8) adressé à l'adresse de bloc (10) et pour lire la commande spécifique à l'appareil du fichier spécifique (8) à l'aide de l'exécuteur de commandes, et
- l'exécuteur de commandes de l'appareil (6) exécute la commande spécifique lue.

12. Système selon la revendication 11, **caractérisé en ce que** l'exécuteur de commandes de l'appareil (6) exécute la commande spécifique à l'appareil si le fichier spécifique (8) contient une identification.

13. Système selon la revendication 11 ou 12, **caractérisé en ce que** le processeur de l'appareil (6) génère une réponse à la commande spécifique à l'appareil exécutée.

14. Système selon la revendication 13, **caractérisé en ce que**
- l'ordinateur (1) envoie une instruction de lecture du système d'exploitation concernant le fichier spécifique (8) à l'appareil (6) ;
- après avoir reçu l'instruction de lecture, l'appareil (6) mémorise dans le fichier spécifique (8') la réponse générée dans l'appareil (6), ce par quoi le fichier spécifique (8 est modifié, et
- dans l'exécution de l'instruction de lecture du système d'exploitation de l'ordinateur (1), l'appareil transmet en retour le fichier spécifique (8') à l'ordinateur (1).

15. Système selon une des revendications 11 à 14, **caractérisé en ce que** l'appareil (6) auquel le fichier spécifique (8) est transmis à l'aide de l'instruction d'écriture du système d'exploitation ne comporte pas de mémoire de masse pour stocker des fichiers.

16. Système selon une des revendications 11 à 15, **caractérisé en ce que** l'interface de l'ordinateur (1) est une interface USB ou une interface SCSI.

17. Système selon une des revendications 11 à 16, **caractérisé en ce que** l'exécuteur de commandes pour exécuter la commande spécifique à l'appareil lue est installé dans un appareil externe (14).

18. Appareil pour exécuter une commande spécifique à l'appareil générée sur un ordinateur comprenant une interface de connexion à un ordinateur sur lequel un programme d'application génère la commande spécifique à l'appareil et la mémorise dans un fichier spécifique, et comprenant un processeur, **caractérisé en ce que** l'appareil de traitement de données (6)
- simule un support de mémoire avec un système de fichiers,
- présente une zone dédiée avec une adresse de bloc (10), et
- comporte un exécuteur de commandes pour exécuter des commandes spécifiques à l'appareil, et
- après avoir reçu le fichier spécifique (8) qui est transmis à l'appareil (6) à l'aide de l'instruction d'écriture du système d'exploitation de l'ordinateur (1) par adressage du fichier (8) à une adresse de bloc (10), adressé à l'adresse de bloc (10) par l'intermédiaire de l'interface de l'ordinateur (1), l'appareil (6) lit dans le fichier spécifique (8) la commande spécifique à l'appareil au moyen de l'exécuteur de commandes, et
- l'exécuteur de commandes de l'appareil (6) exécute la commande spécifique lue.

19. Appareil selon la revendication 18, **caractérisé en ce qu'**il ne comporte pas de mémoire de masse pour stocker des fichiers.
